# EUROPEAN PATENT APPLICATION

(11) **EP 4 303 773 A1**
(43) Date of publication of application: **10.01.2024**
(21) Application number: 21929204.2
(22) Date of filing: 09.12.2021
(51) Int. Cl.: G06N 3/08

(54) **MACHINE LEARNING DEVICE, INFERENCE DEVICE, MACHINE LEARNING METHOD, AND MACHINE LEARNING PROGRAM**

(30) Priority: 02.03.2021 JP 2021032801
(71) Applicant: JVCKenwood Corporation, Yokohama-shi, Kanagawa 2210022 (JP)
(72) Inventor: TAKEHARA Hideki, Yokohama-shi Kanagawa 221-0022 (JP); KIDA Shingo, Yokohama-shi Kanagawa 221-0022 (JP); YANG Yincheng, Yokohama-shi Kanagawa 221-0022 (JP)
(74) Representative: Klang, Alexander H.
(86) International application number: PCT/JP2021/045346
(87) International publication number: WO 2022/185646

(57) **Abstract**

An initialization rate determination unit (22) determines, in accordance with a depth of a layer in a neural network model, a first initialization rate for initializing weights in the neural network model on a first task. A machine learning execution unit (24) generates a neural network model trained on a first task by training on the first task by machine learning. An initialization unit (26) initializes weights in the neural network model trained on the first task, based on the first initialization rate, to generate an initialized neural network model trained on the first task, the initialized neural network trained on the first task being used in a second task.

## Description

### [TECHNICAL FIELD]

The present invention relates to machine learning technologies.

### [BACKGROUND ART]

Humans can learn new knowledge through long-term experience and maintain previous knowledge so as not to forget it. Meanwhile, knowledge of a convolutional neural network (CNN)) depends on the dataset used in learning, and, in order to adapt to changes in the data distribution, it is necessary to retrain the CNN parameters on the entire dataset. As a CNN learns about new tasks, the accuracy of estimation on previous tasks decreases. Thus, continual learning in a CNN inevitably suffers from catastrophic forgetting, in which results learned in previous tasks are forgotten while new tasks are being learned.

Continual learning (incremental or continual learning) is proposed as a scheme to avoid catastrophic forgetting. Continual learning is a learning method that improves a current trained model to learn new tasks and new data as they occur, instead of training the model from scratch. PackNet is known as one method of continual learning (Non-Patent Literature 1). In continual learning by PackNet, the weights used are changed in the order of added tasks.

[Non-patent Literature] Mallya, Arun, and Svetlana Lazebnik. "Packnet: Adding multiple tasks to a single network by iterative pruning." Proceedings of the IEEE Conference on Computer Vision and Pattern Recognition. 2018.

### [SUMMARY OF INVENTION]

An issue in PackNet has been that the number of tasks that can be learned additionally and the accuracy of the added tasks are not improved for the performance on the target task.

The present invention addresses the issue described above, and a purpose thereof is to provide a machine learning technology capable of optimizing the number of tasks that can be additionally learned and the accuracy of the added task for the performance on the target task.

A machine learning device according to an aspect of the embodiment includes: an initialization rate determination unit that determines, in accordance with a depth of a layer in a neural network model, a first initialization rate for initializing weights in the neural network model on a first task; a machine learning execution unit that generates a neural network model trained on a first task by training on the first task by machine learning; and an initialization unit that initializes weights in the neural network model trained on the first task, based on the first initialization rate, to generate an initialized neural network model trained on the first task, the initialized neural network trained on the first task being used in a second task.

Another aspect of the embodiment relates to an inference device. The device includes: a first task input unit that selects one task from a plurality of tasks; an inference model generation unit that generates an inference neural network model in which weights in a neural network model trained on the plurality of tasks other than weights used in the task selected are set to 0; and an inference unit that infers the task selected, based on the inference neural network model.

Still another aspect of the embodiment relates to a machine learning method. The method includes: determining, in accordance with a depth of a layer in a neural network model, a first initialization rate for initializing weights in the neural network model on a first task; generating a neural network model trained on a first task by training on the first task by machine learning; and initializing weights in the neural network model trained on the first task, based on the first initialization rate, to generate an initialized neural network model trained on the first task, the initialized neural network trained on the first task being used in a second task.

Optional combinations of the aforementioned constituting elements, and implementations of the embodiment in the form of methods, apparatuses, systems, recording mediums, and computer programs may also be practiced as additional modes of the present invention.

The embodiment provides a machine learning technology capable of optimizing the number of tasks that can be additionally learned and the accuracy of the added task for the performance on the target task.

### [BRIEF DESCRIPTION OF DRAWINGS]

Fig. 1 shows a configuration of a machine learning device and an inference device according to the embodiment;
Fig. 2 shows a detailed configuration of the continual learning unit of the machine learning device of Fig. 1;
Fig. 3 is a flowchart for explaining the operation of the continual learning unit of Fig. 2 on task 1;
Fig. 4 is a diagram illustrating the structure of the neural network model used in the machine learning execution unit of Fig. 2;
Figs. 5A and 5B are diagrams illustrating predetermined values of the initialization rates in the neural network model on task 1;
Fig. 6 is a diagram for explaining the number of input/output channels of each layer in the neural network model, the number of weights between input/output channels, the total number of weights in each layer, and the number of parameters;
Fig. 7 is a flowchart for explaining the operation of the continual learning unit of Fig. 2 on task 2;
Fig. 8 is a diagram illustrating predetermined values of the initialization rates in the neural network model on task 3; and
Fig. 9 is a flowchart illustrating the operation of the inference device of Fig. 1 on task N.

### [DESCRIPTION OF EMBODIMENTS]

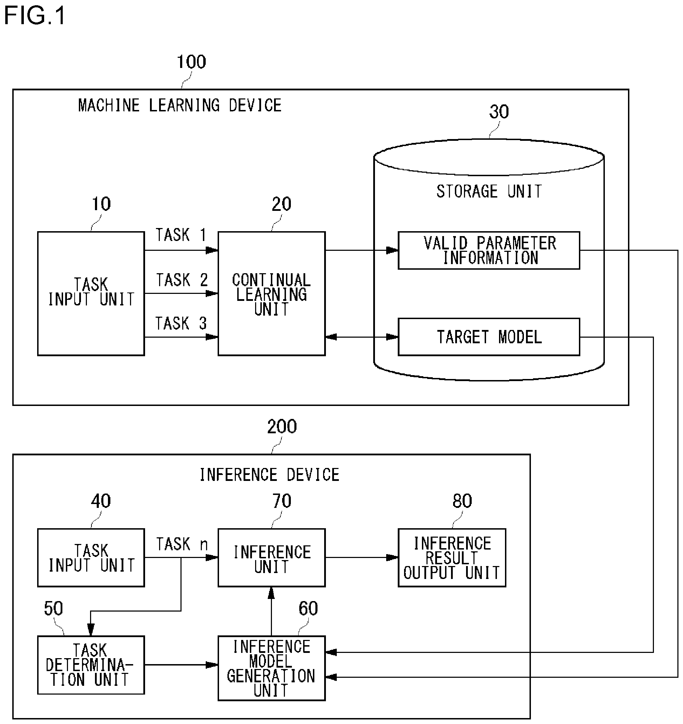

Fig. 1 shows a configuration of a machine learning device 100 and an inference device 200 according to the embodiment. The machine learning device 100 includes a task input unit 10, a continual learning unit 20, and a storage unit 30. The inference device 200 includes a task input unit 40, a task determination unit 50, an inference model generation unit 60, an inference unit 70, and an inference result output unit 80.

In continual learning, it is required to learn new tasks without catastrophic forgetting. The machine learning device 100 of this embodiment is directed to the purpose of causing a trained model to learn particularly new tasks additionally in continual learning.

The machine learning device 100 is a device to generate a target model and valid parameter information from a plurality of tasks by continual learning. To simplify the explanation, it will be assumed that there are following three tasks, but the number and type of tasks are as desired.

Task 1 is an image recognition task using the ImageNet dataset, which is the first dataset. Task 2 is an image recognition task using the Places 365 dataset, which is the second data set. Task 3 is an image recognition task using the CUBS Birds dataset, which is the third dataset. Task N input to the inference device 200 is any of task 1 to task 3 for which the target model has been trained. In this example, different datasets are assigned to the respective tasks, but the embodiment is not limited to this so long as the tasks are different recognition tasks. One data set may be divided into a plurality of tasks. For example, different sets each comprising 10 classes in the ImageNet dataset may be assigned to each task 1, task 2, and task 3, respectively. Further, the image of each task may be an image input to the task input unit 10 from an image acquisition unit such as a camera (not shown). For example, a dataset of existing images may be assigned to task 1, and a data set of images input to the task input unit 10 from a camera, etc. (not shown) may be assigned to task 2 and the subsequent tasks.

The task input unit 10 sequentially supplies a plurality of tasks (in this case, task 1, task 2, and task 3) to the continual learning unit 20.

The continual learning unit 20 trains a neural network model by continual learning using the plurality of tasks (in this case, task 1, task 2, task 3) sequentially to generate a target model and valid parameter information.

The target model is a trained neural network model generated by the continual learning unit 20. The target model is trained by continual learning to become a neural network ultimately trained on the plurality of tasks (in this case, task 1, task 2, task 3). Given the trained neural network generated by the continual learning unit 20, the valid parameter information is information that specifies a parameter such as a weight in the trained neural network model, the parameter being made valid for each task. Details of valid parameter information will be described later.

The storage unit 30 stores the target model and the valid parameter information.

The inference device 200 is a device that generates an inference result on the plurality of tasks by using the target model and the valid parameter information generated by the machine learning device 100.

The task input unit 40 supplies task N to the inference unit 70. The task determination unit 50 determines which of the learned tasks (in this case, task 1, task 2, or task 3) that task N supplied to the inference unit 70 is identified with and supplies a determination result to the inference model generation unit 60. In this embodiment, it is assumed that the user specifies one of task 1 to task 3, but the determination may be made automatically by some method.

The inference model generation unit 60 stores the target model and the valid parameter information acquired from the storage unit 30 of the machine learning device 100, generates an inference model based on the target model and the valid parameter information, and supplies the inference model to the inference unit 70.

The inference unit 70 infers task N based on the inference model generated by the inference model generation unit 60 and supplies the inference result to the inference result output unit 80. The inference result output unit 90 outputs the inference result.

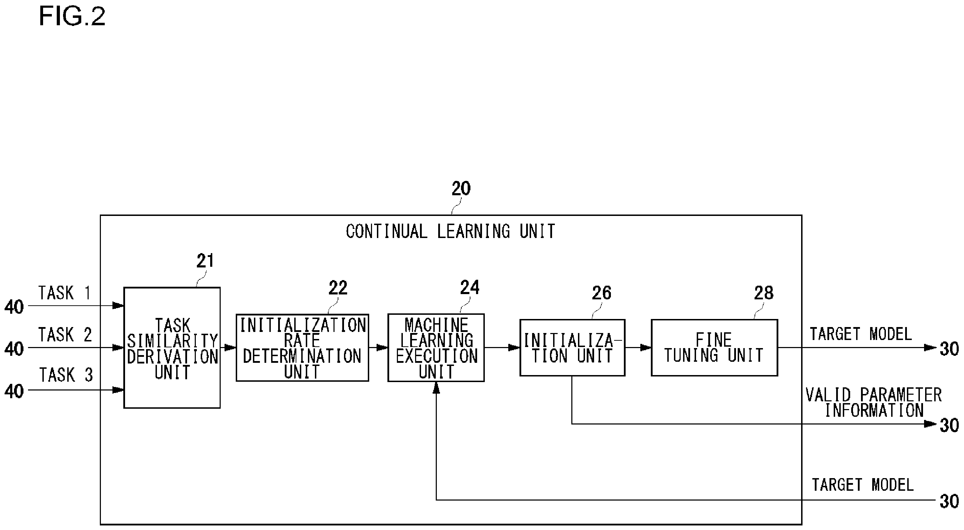

Fig. 2 shows a detailed configuration of the continual learning unit 20 of the machine learning device 100. The continual learning unit 20 includes a task similarity derivation unit 21, an initialization rate determination unit 22, a machine learning execution unit 24, an initialization unit 26, and a fine tuning unit 28.

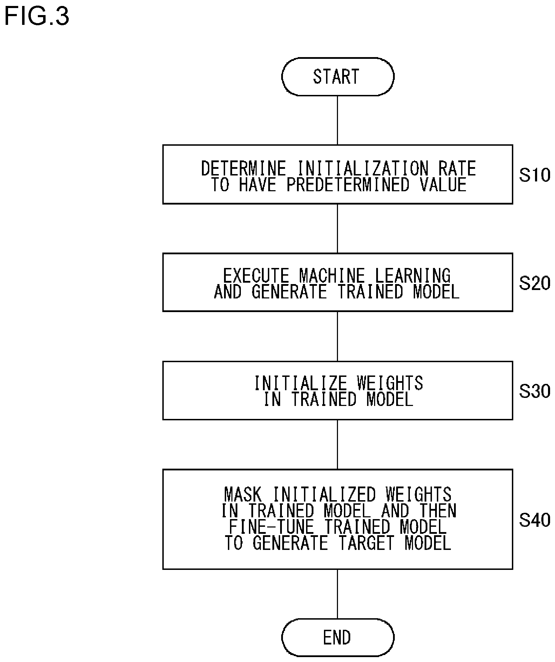

Fig. 3 is a flowchart for explaining the operation of the continual learning unit 20 on task 1. With reference to Figs. 2 and 3, the configuration and the operation of the continual learning unit 20 on task 1 will be described.

The task similarity derivation unit 21 does not calculate a task similarity of task 1 because it is the first task.

The initialization rate determination unit 22 determines an initialization rate in the neural network model to a predetermined value according to the depth of a layer in the neural network layer (S10). In task 1, all weights in the neural network model are initialized. The predetermined value will be described later.

The machine learning execution unit 24 generates a trained neural network model by training the neural network model on task 1 by machine learning (S20).

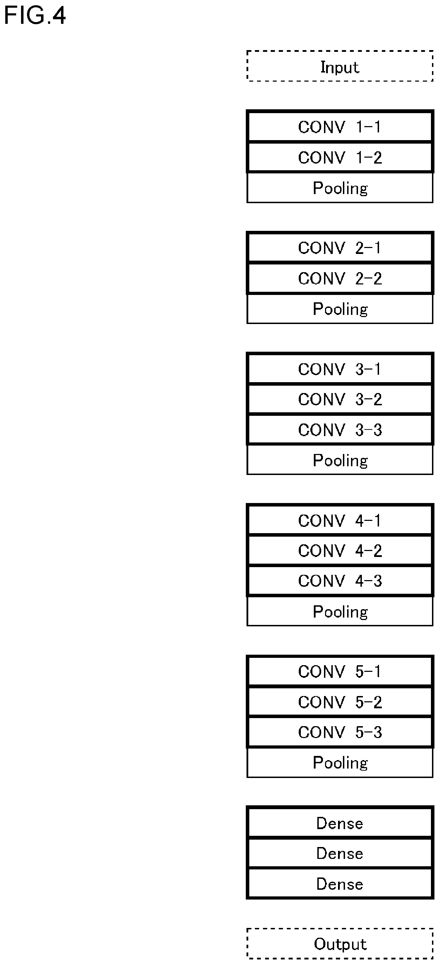

Fig. 4 is a diagram illustrating the structure of the neural network model used in the machine learning execution unit 24.

In this embodiment, the neural network model is assumed to be a deep neural network model VGG16. VGG16 is comprised of 13 convolutional layers (CONV), 3 fully-connected layers (Dense), and 5 pooling layers. The layers that are targeted for training include convolutional layers and full-connected layers. The pooling layer is a layer that sub-samples the feature map output from the convolutional layer. Layers close the input are called shallow layers, and layers closed to the output are called deep layers. The neural network model need not be VGG16, and the number of layers need not be as described in this embodiment.

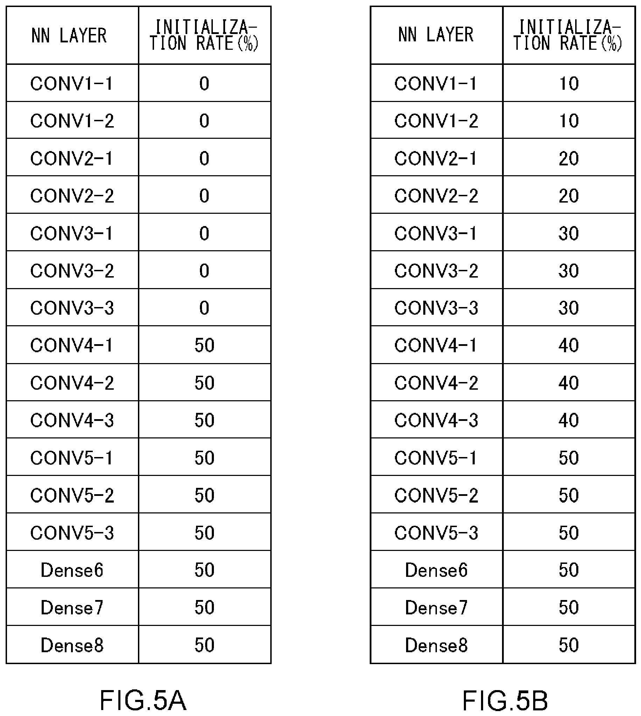

Figs. 5A and 5B are diagrams illustrating predetermined values of the initialization rate in the neural network model on task 1.

The initialization rate is set to a predetermined value in each layer in the neural network. Referring to Fig. 5A, the initialization rate is set to 0% in CONV1-1, CONV1-2, CONV2-1, CONV2-2, CONV3-1, CONV3-2, and CONV3-3, and the initialization rate is set to 50% in CONV4-1, CONV4-2, CONV4-3, CONV5-1, CONV5-2, CONV5-3, Dense6, Dense7, and Dense8.

Referring to Fig. 5B, the initialization rate is set to 10% in CONV1-1 and CONV1-2, the initialization rate is set to 20% in CONV2-1 and CONV2-2, the initialization rate is set to 30% in CONV3-1, CONV3-2, and CONV3-3, the initialization rate is set to 40% in CONV4-1, CONV4-2, and CONV4-3, and the initialization rate is set to 50% in CONV5-1, CONV5-2, CONV5-3, Dense6, Dense7, and Dense8.

It is preferrable that a larger initialization rate is set in deep layers than in shallow layers in hierarchy of the neural network model. The larger the initialization rate, the larger the number of weights available for use in task 2 and the subsequent tasks. In the following description, it will be assumed that predetermined values of the initialization rate in the neural network model on task 1 are as shown in Fig. 5A.

Reference is made back to Fig. 2 and Fig. 3. The initialization unit 26 initializes the weights in the trained neural network model based on the initialization rate in each layer (S30). In this case, initialization means to set the weight in the neural network to 0 (zero). In each layer in the trained neural network model, a proportion of the weights in each layer are initialized to 0 in the ascending order of the weight, i.e., starting with the weight closest to 0, the proportion corresponding to the initialization rate.

The weights that are not initialized will be weights used in task 1, and the weights that are initialized are weights used in task 2 and the subsequent tasks.

The valid parameter information on task 1 is information for specifying weights used in task 1, i.e., weights that have not been initialized after task 1 is learned. The initialization unit 26 stores the valid parameter information on task 1 in the storage unit 30.

Valid parameter information is binary information assigned one bit each to all weights in the neural network model. The initialization unit 26 may assign signs to all weights in the neural network model such that a sign "0" is assigned if the weight is 0, and a sign "1" is assigned if the weight is other than 0. The initialization unit 26 may store the signs in the storage unit 30 as a code string.

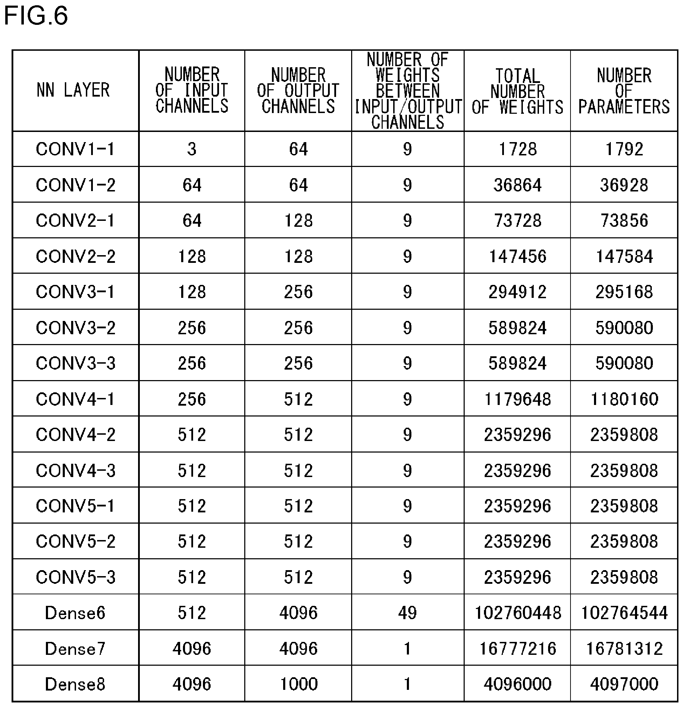

Fig. 6 is a diagram for explaining the number of input/output channels in each layer in the neural network model, the number of weights between input/output channels, the total number of weights in each layer, and the number of parameters.

When the initialization rate is 50%, 589824 weights, which occupy 50% of the 1179648 weights, are initialized in the case of, for example, CONV4-1.

Reference is made back to Fig. 2 and Fig. 3. The fine tuning unit 28 generates a target model by fine-tuning the neural network model trained on task 1 so as not to change the initialized weights (S40). The weights that are fine-tuned are the uninitialized weights used in task 1.

A description will now be given of the operation of the continual learning unit 20 on task 2.

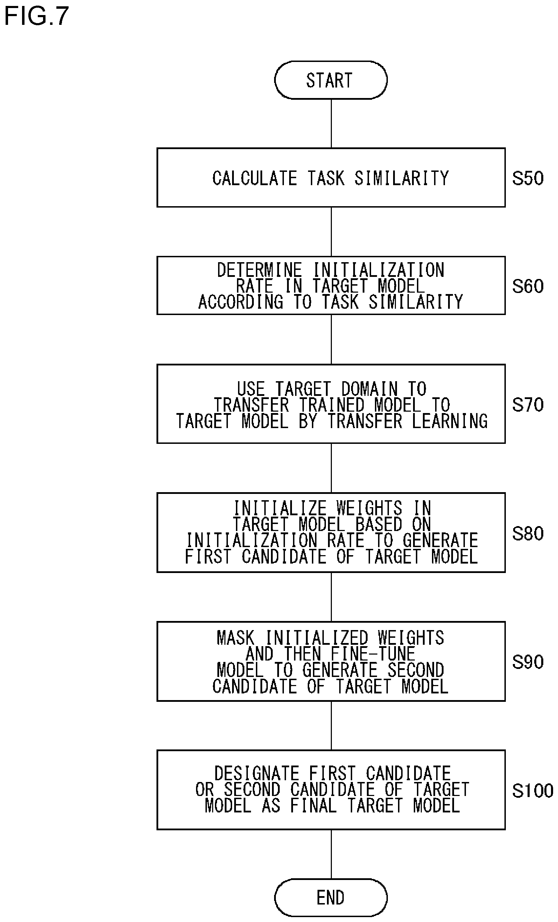

Fig. 7 is a flowchart for explaining the operation of the continual learning unit 20 on task 2. With reference to Figs. 2 and 7, the configuration and the operation of the continual learning unit 20 on task 2 will be described.

The task similarity derivation unit 21 derives a distance between probability density functions of the data distribution of task 1, which is a learned task, and task 2, which is a target task, as a task similarity (S50). In this case, Jensen-Shannon divergence (JS divergence) is used as a distance between two probability density functions. JS divergence takes a value from 0 to 1. The smaller a JS divergence, the closer a distance between two probability density functions, and the larger a JS divergence, the greater a distance between the two probability density functions. Therefore, the smaller the JS divergence, the larger the task similarity set, and the larger the JS divergence, the smaller the task similarity set.

In this scenario, JS divergence is used to derive a task similarity, but any measure such as Kalbak Leibler divergence (KLD) may be used so long as a distance between two probability density functions can be evaluated.

The initialization rate determination unit 22 determines the initialization rate in the target model to a predetermined value according to the depth of a layer in the neural network layer and the task similarity (S60). The predetermined value will be described later.

The weight to which the initialization rate is applied is the weight that is not assigned to any task. The weight assigned to one of the tasks is not initialized.

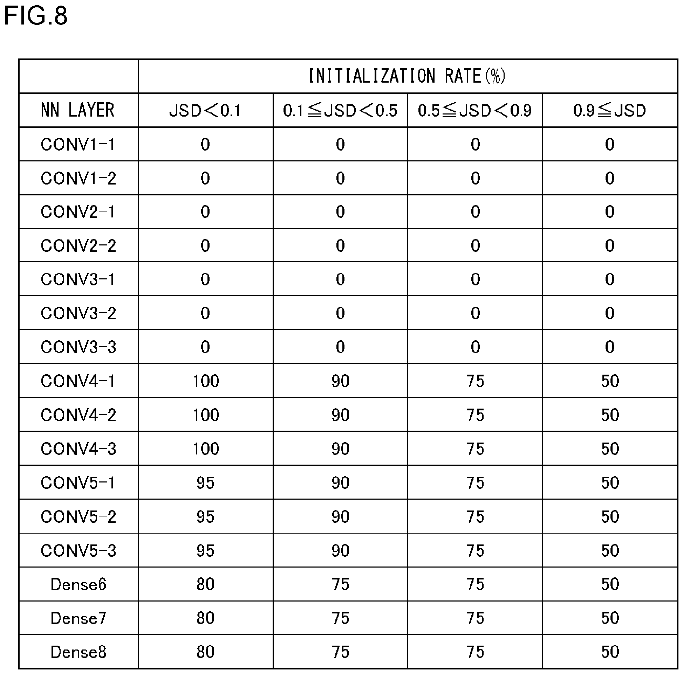

Fig. 8 is a diagram illustrating predetermined values of the initialization rate in the neural network model on task 2.

The initialization rate is set to a predetermined value as follows based on the depth of a layer in the neural network layer and the task similarity.

Since the weights in CONV1-1 to CONV3-3 that are not initialized after task 1, i.e., a learned task, include no weights that should be initialized so that the initialization rates are 0.

When the task similarity is large, i.e., when the JS divergence (JSD) is small, initialization rates in shallow layers in the hierarchy are set to be large, and initialization rates in deeper layers in the hierarchy are set to be small.

When the task similarity is large, i.e., when the JSD is small, the initialization rate is set to be a larger than when the task similarity is small, i.e., the JSD is large.

When the task similarity is large, i.e., when the JSD is small, the weight in CONV4-X(X=1,2,3) is not updated.

More specifically, when, as shown in Fig. 8, JSD <0.1, for example, the initialization rate is set to 100% in CONV4-1, CONV4-2, and CONV4-3, the initialization rate is set to 95% in CONV5-1, CONV5-2, and CONV5-3, and the initialization rate is set to 80% in Dense6, Dense7, and Dense8.

When 0.1≤JSD<0.5, the initialization rate is set to 90% in CONV4-1, CONV4-2, CONV4-3, CONV5-1, CONV5-2, and CONV5-3, and the initialization rate is set to 75% in Dense6, Dense7, and Dense8.

When 0.5≤JSD<0.9, the initialization rate is set to 75% in CONV4-1, CONV4-2, CONV4-3, CONV5-1, CONV5-2, CONV5-3, Dense6, Dense7, and Dense8.

When 0.9≤JSD, the initialization rate is set to 50% in CONV4-1, CONV4-2, CONV4-3, CONV5-1, CONV5-2, CONV5-3, Dense6, Dense7, and Dense8.

In the case of a task having a high similarity, those features that are higher in the hierarchy are similar to those of the learned task. Based on the foregoing, therefore, layers for learning feature amounts higher in the hierarchy are configured to have larges initialization rates, thereby leaving the initialized weights for those tasks subsequently added.

When task 1 and task 2 have a high similarity, the probability that the weight assigned to task 1 can be commonly used for inference in task 2 is large. Therefore, the number of weights newly initialized for assignment to task 2 can be reduced. Conversely, when task 1 and task 2 have a low similarity, the probability that the weight assigned to task 1 can be commonly used for inference in task 2 is small. Therefore, it is necessary to increase the number of weights newly initialized for assignment to task 2.

Reference is made back to Fig. 2 and Fig. 3. The machine learning execution unit 24 uses task 2, a target task, to generate a trained neural network model by training a target model by transfer learning so as not to change the weights assigned to the learned task (S70). In this case, the weight assigned to the learned task is the weight used in task 1. The weight assigned to the learned task remains unchanged before and after transfer learning. In this discussion, training a target model such that the weight assigned to the learned task is not changed is seen as transfer of the weight assigned to the learned task to a further task and so is referred to as transfer learning. Alternatively, such learning may simply be referred to as learning.

The initialization unit 26 initializes the weights in the trained neural network model based on the initialization rates to generate a first candidate of the target model (S80).

The uninitialized weights including the weights assigned to the learned task are assigned as weights used in task 2.

The valid parameter information on task 2 shows weights used in task 2 and is information that identify those weights that are not initialized. The initialization unit 26 stores the valid parameter information on task 2 in the storage unit 30.

The fine tuning unit 28 fine-tunes the first candidate of the target model on task 2 so as not to change the weights assigned to the learned task and the initialized weights and generates a second candidate of the target model (S90) .

Of the first candidate of the target model and the second candidate of the target model, the fine tuning unit 28 determines the candidate with higher accuracy as the final target model (S100). Basically, it is appropriate to select the second candidate of the target model as the final target model. In order to enhance the generalization performance of the target model, however, it is preferable to evaluate the inference accuracy of the first and second candidates of the target model at the end of learning, by using evaluation data different from the training data used to train the weights in the target model, and to determine the candidate with higher accuracy as the final target model.

Thus, continual learning for learning new tasks to adapt to the characteristics of the task is made possible by training the model on a new task setting the initialization rates in the trained neural network model based on the depth of a layer in the neural network model and the similarity between the tasks. In this way, wasteful use of weights can be reduced and the number of tasks that can be learned additionally can be increased. In addition, initialization of useful weights is reduced, and the inference accuracy on the added task can be maintained high.

Task 3 is processed in the same manner as task 2 and differs only in the method of deriving a task similarity.

The task similarity derivation unit 21 derives a task similarity 31 between task 3 and task 1 and a task similarity 32 between task 3 and task 2. Of the task similarity 31 and the task similarity 32, the task having the larger task similarity is designated as a learned task.

In general, the task similarity derivation unit 21 selects, as the learned task, one learned task having the largest similarity to the target task from among the plurality of learned tasks.

When the number of tasks is increased, however, it is not efficient to derive a task similarity for all tasks. Therefore, the target for which a task similarity is derived can be selected as follows.
(1) A new task is preferentially selected as a target of derivation. For example, a predetermined number of tasks are left to remain as targets of derivation in the order of newly input tasks.
(2) A task with a small initialization rate (a task that is not similar) is preferentially selected as a target of derivation. For example, a predetermined number of tasks are left to remain as targets of derivation in the ascending order of initialization rate of the task.
(3) A task having an initialization rate smaller than a predetermined value (a task that is not similar) is selected as a target of derivation. For example, a predetermined number of tasks having an initialization rate smaller than a predetermined value are left to remain as targets of derivation.
(4) Combination of (1) and (2) above
(5) Combination of (1) and (3) above

Thus, the number of weights required for a target task can be reduced by designating, as the learned task, a task having the largest similarity or a relatively large similarity with the target task among the plurality of learned tasks.

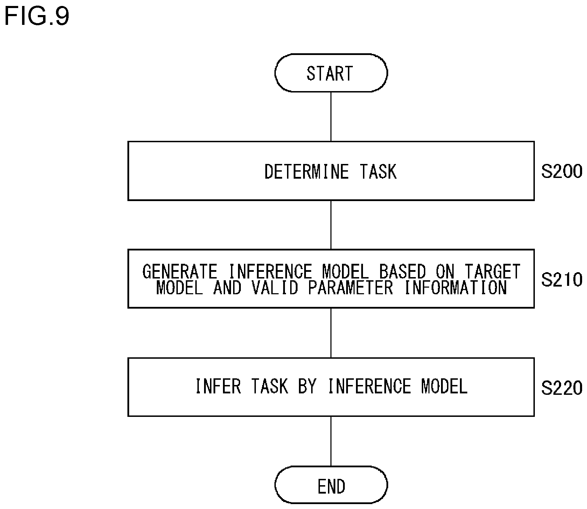

A description will now be given of the inference device 200 and its operation. Fig. 9 is a flowchart illustrating the operation of the inference device 200 on task N.

The task determination unit 50 determines whether task N input to the inference unit 70 is task 1, task 2, or task 3 (S200). In this embodiment, the user specifies one of the tasks.

The inference model generation unit 60 generates an inference neural network model (hereinafter referred to as "inference model") based on the trained target model and the valid parameter information (S210). The target model is a neural network model trained on tasks 1 to 3. When task N is determined to be task i (i is one of 1-3), the inference model generation unit 60 generates an inference model in which the weights in the target model other than the weights used in task i are set to 0, based on the valid parameter information on task i. Specifically, the inference model generation unit 60 may read a code string of the valid parameter information, and, if the sign is "1", maintain the weight corresponding to the string unchanged, and, if the sign is "0", change the weight corresponding to the string to 0.

The inference unit 70 generates an inference result on task N input in the inference model generated on task i (S220).

In this embodiment, the initialization unit 26 initializes the weights in the trained neural network model in units of weight, based on the initialization rates. Alternatively, the initialization unit 26 may initialize the weights in the trained neural network model in units of filter, based on the initialization rates.

The above-described various processes in the machine learning device 100 and the inference device 200 can of course be implemented by hardware-based devices such as a CPU and a memory and can also be implemented by firmware stored in a read-only memory (ROM), a flash memory, etc., or by software on a computer, etc. The firmware program or the software program may be made available on, for example, a computer readable recording medium. Alternatively, the program may be transmitted and received to and from a server via a wired or wireless network. Still alternatively, the program may be transmitted and received in the form of data broadcast over terrestrial or satellite digital broadcast systems.

As described above, it is possible, according to the machine learning device 100 of the embodiment, to optimize the number of tasks that can be additionally learned and the accuracy of the added task for the performance on the target task, by changing the utilization rate of the weights in the target model trained by continual learning, in accordance with the similarity or correlation between the trained task and the target task.

Described above is an explanation based on an exemplary embodiment. The embodiment is intended to be illustrative only and it will be understood by those skilled in the art that various modifications to combinations of constituting elements and processes are possible and that such modifications are also within the scope of the present invention.

### [INDUSTRIAL APPLICABILITY]

The present invention relates to machine learning technologies.

### [REFERENCE SIGNS LIST]

10 task input unit, 20 continual learning unit, 21 task similarity derivation unit, 22 initialization rate determination unit, 24 machine learning execution unit, 26 initialization unit, 28 fine tuning unit, 30 storage unit, 40 task input unit, 50 task determination unit, 60 inference model generation unit, 70 inference unit, 80 inference result output unit, 100 machine learning device, 200 inference device

## Claims

1. A machine learning device comprising:
an initialization rate determination unit that determines, in accordance with a depth of a layer in a neural network model, a first initialization rate for initializing weights in the neural network model on a first task;
a machine learning execution unit that generates a neural network model trained on a first task by training on the first task by machine learning; and
an initialization unit that initializes weights in the neural network model trained on the first task, based on the first initialization rate, to generate an initialized neural network model trained on the first task, the initialized neural network trained on the first task being used in a second task.

2. The machine learning device according to claim 1, wherein
the initialization rate determination unit sets the first initialization rate in a convolution layer close to an input layer in the neural network model to be smaller than the first initialization rate in a convolution layer close to an output layer.

3. The machine learning device according to claim 1 or 2, further comprising:
a similarity derivation unit that derives a similarity between the first task and the second task, wherein
the initialization rate determination unit determines, in accordance with a depth of a layer in a neural network model and with the task similarity, a second initialization rate for initializing weights in the neural network model on the second task,
the machine learning execution unit trains the initialized neural network trained on the first task to learn the second task by transfer learning to generate a neural network model trained on the second task, and
the initialization unit initializes weights in the neural network model trained on the second task, based on the second initialization rate, to generate an initialized neural network model trained on the second task, the initialized neural network model trained on the second task being used in a third task.

4. The machine learning device according to claim 3, wherein
the larger the task similarity, the larger the second initialization rate determined by the initialization rate determination unit.

5. An inference device comprising:
a first task input unit that selects one task from a plurality of tasks;
an inference model generation unit that generates an inference neural network model in which weights in a neural network model trained on the plurality of tasks other than weights used in the task selected are set to 0; and
an inference unit that infers the task selected, based on the inference neural network model.

6. A machine learning method comprising:
determining, in accordance with a depth of a layer in a neural network model, a first initialization rate for initializing weights in the neural network model on a first task;
generating a neural network model trained on a first task by training on the first task by machine learning; and
initializing weights in the neural network model trained on the first task, based on the first initialization rate, to generate an initialized neural network model trained on the first task, the initialized neural network trained on the first task being used in a second task.

7. A machine learning program comprising computer-implemented modules including:
a module that determines, in accordance with a depth of a layer in a neural network model, a first initialization rate for initializing weights in the neural network model on a first task;
a module that generates a neural network model trained on a first task by training on the first task by machine learning; and
a module that initializes weights in the neural network model trained on the first task, based on the first initialization rate, to generate an initialized neural network model trained on the first task, the initialized neural network trained on the first task being used in a second task.
